(19) **Europäisches Patentamt**

**European Patent Office**

**Office européen des brevets**

(11) Numéro de publication : **0 380 381 B1**

(12) **FASCICULE DE BREVET EUROPEEN**

(45) Date de publication du fascicule du brevet :
27.04.94 Bulletin 94/17

(51) Int. Cl.$^5$ : **G21C 3/06**, C22C 16/00

(21) Numéro de dépôt : **90400082.5**

(22) Date de dépôt : **11.01.90**

(54) **Crayon pour assemblage combustible d'un réacteur nucléaire résistant à la corrosion et à l'usure.**

(30) Priorité : **23.01.89 FR 8900761**

(43) Date de publication de la demande :
**01.08.90 Bulletin 90/31**

(45) Mention de la délivrance du brevet :
**27.04.94 Bulletin 94/17**

(84) Etats contractants désignés :
**BE CH DE ES GB IT LI SE**

(56) Documents cités :
**EP-A- 0 195 155**
**EP-A- 0 212 351**
**DE-B- 1 202 985**
**PROCEEDINGS OF THE 20TH INTERSOCIETY ENERGY CONVERSION ENGINEERING CONFERENCE, août 1985, vol. 3, pages 3.736-3.742, Society of Automotive Engineers, INC., Warrendale, PA, US; D.S. DUTT et al.: "Performance and testing of refractory alloy clad fuel elements for space reactors"**

(73) Titulaire : **FRAMATOME**
**Tour Fiat 1, Place de la Coupole**
**F-92400 Courbevoie (FR)**

(73) Titulaire : **COGEMA**
**2, rue Paul Dautier**
**F-78141 Velizy Villacoublay (FR)**
Titulaire : **CEZUS Compagnie Européenne du Zirconium**
**Tour Manhattan - La Défense 2 6, Place de l'Iris**
**F-92400 Courbevoie (FR)**
Titulaire : **ZIRCOTUBE**
**Tour Manhattan, La Défense 2, 6, place de l'Iris**
**F-92400 Courbevoie (FR)**

(72) Inventeur : **Mardon, Jean-Paul**
**27 A rue André Lassagne**
**F-69300 Caluire (FR)**
Inventeur : **Perez, Marc**
**12, rue de l'Aspirant Dargent**
**F-92300 Levallois (FR)**
Inventeur : **Charquet, Daniel**
**31 Rue Félix Chautemps**
**F-73200 Albertville (FR)**
Inventeur : **Senevat, Jean**
**11 Avenue Bertie**
**F-44250 Saint Brevin Les Pins (FR)**

(74) Mandataire : **Bouget, Lucien et al**
**Cabinet Lavoix 2, Place d'Estienne d'Orves**
**F-75441 Paris Cédex 09 (FR)**

**EP 0 380 381 B1**

## Description

L'invention concerne un crayon pour un assemblage combustible d'un réacteur nucléaire présentant une résistance améliorée à la corrosion et à l'usure.

Les assemblages combustibles des réacteurs nucléaires à eau et en particulier des réacteurs nucléaires à eau sous pression comportent une ossature dans laquelle sont introduits des crayons combustibles constitués par une gaine renfermant un matériau combustible nucléaire, tel qu'un oxyde d'uranium ou de plutonium sous forme de pastilles frittées.

La gaine réalisée à partir d'un tube en alliage de zirconium doit présenter une bonne résistance à la corrosion sous l'effet du fluide primaire en circulation en contact avec la surface extérieure de la gaine.

On utilise de manière habituelle, pour constituer la gaine des crayons combustibles des assemblages des réacteurs refroidis à l'eau, un alliage à base de zirconium renfermant principalement de 1,2 à 1,7 % d'étain, de 0,18 à 0,24 % de fer et de 0,07 à 0,13 % de chrome ou encore un alliage de zirconium renfermant de 1,2 à 1,7 % d'étain, de 0,07 à 0,2 % de fer, de 0,05 à 0,15 % de chrome et de 0,03 à 0,08 % de nickel.

Afin d'améliorer la tenue à la corrosion sous irradiation des gaines de crayons combustibles, dans l'ambiance du réacteur nucléaire en fonctionnement et d'augmenter ainsi la durée de vie des assemblages combustibles dans le coeur, on a proposé des modifications ou ajustements de la composition des alliages de zirconium mentionnés ci-dessus ou encore de les remplacer par des alliages renfermant des éléments tels que le vanadium, le niobium ou le cuivre.

Ces alliages ne présentent cependant pas d'avantages décisifs par rapport aux alliages utilisés couramment dont la composition est rappelée ci-dessus, dans la mesure où leurs caractéristiques mécaniques et en particulier leur dureté et leur résistance à l'usure sont généralement inférieures à celles des compositions utilisées couramment.

En plus de la corrosion de leur surface externe exposée au fluide de refroidissement du réacteur nucléaire, les gaines subissent une corrosion interne due en particulier à l'interaction entre les pastilles de combustible et la surface intérieure de la gaine. Pour réduire cette corrosion interne, on a proposé le dépôt d'une couche d'isolation entre les pastilles et la gaine.

On a également proposé, dans la demande de brevet EP-A-0.212.351, de réaliser la gaine sous la forme d'un tube duplex comportant une couche intérieure tubulaire en un alliage de zirconium de type classique tel que décrit plus haut et une couche de surface améliorant la tenue à la corrosion de la gaine en un alliage de zirconium différent de l'alliage constituant la couche interne, renfermant du fer ainsi que l'un au moins des éléments vanadium, platine et cuivre. Cette couche de surface dont l'épaisseur représente 5 à 20 % de l'épaisseur totale de la paroi de la gaine peut être réalisée par extrusion d'une ébauche constituée par un tube intérieur en alliage de zirconium de composition classique, sur lequel est enfilé un tube extérieur ayant la composition de la couche de surface.

La gaine est ensuite laminée sur un laminoir à pas de pélerin, jusqu'à son diamètre définitif.

Les crayons de combustible dont la gaine est constituée par un tube duplex présentent une tenue à la corrosion externe généralisée dans l'ambiance du réacteur nucléaire, nettement améliorée. Cependant, la dureté et la résistance à l'usure de la couche de surface sont inférieures à celles des gaines en alliage de type classique.

Il en résulte que, lors du chargement d'un assemblage combustible en crayons neufs ou lors du remplacement de crayons dans un assemblage combustible usagé, les gaines des crayons subissent, sur leur surface externe, une usure accrue, ce qui peut se traduire par l'apparition de défauts et par une corrosion locale accrue.

Le but de l'invention est donc de proposer un crayon pour un assemblage combustible d'un réacteur nucléaire, contenant un matériau combustible nucléaire, à l'intérieur d'une gaine comportant une couche tubulaire interne et une couche de surface en des alliages de zirconium différents l'un de l'autre, ce crayon ayant une résistance à la corrosion externe et à l'usure nettement améliorée aussi bien par rapport aux crayons dont la gaine est constituée par un tube homogène en alliage de zirconium de type classique que par rapport aux crayons ayant une gaine constituée par un tube duplex.

Dans ce but, la couche de surface comportant une épaisseur comprise entre 10 et 25 % de l'épaisseur totale de la paroi de la gaine est constituée par un alliage à base de zirconium contenant de 0,35 à 0,65 % en poids d'étain, de 0,20 à 0,65 % de fer, 0,09 à 0,16 % d'oxygène ainsi que du niobium dans une proportion de 0,35 à 0,65 % ou du vanadium dans une proportion de 0,25 à 0,35 %.

L'invention est également relative à un crayon combustible dont la gaine comporte une couche tubulaire interne constituée par un alliage de zirconium renfermant de 0,8 à 1,2 % de niobium et une couche de surface selon la caractéristique principale de l'invention.

Afin de bien faire comprendre l'invention, on va maintenant décrire, à titre d'exemples non limitatifs, plusieurs modes de réalisation d'un crayon combustible selon l'invention destiné à un assemblage combustible pour un réacteur nucléaire à eau sous pression.

Dans tous les cas, la gaine du crayon combustible suivant l'invention est obtenue par extrusion puis laminage sur un laminoir à pas de pélerin d'une ébauche constituée par une âme tubulaire en alliage de zirconium sur laquelle est introduit un tube externe ayant une composition correspondant à la composition de la couche de surface telle que définie ci-dessus.

Dans son état final, la gaine du crayon combustible suivant l'invention présente les caractéristiques dimensionnelles suivantes : diamètre extérieur 9,63 ± 0,04 mm, épaisseur totale minimale de la paroi de la gaine 0,605 mm, épaisseur minimale de la couche de surface 0,060 mm.

Exemples 1, 2 et 3 :

La couche tubulaire interne est réalisée à partir d'un alliage de zirconium de type classique et d'application courante dans le cas de la fabrication des gaines de crayons combustibles pour assemblages destinés à des réacteurs nucléaires à eau sous pression.

Un tel alliage à base de zirconium, désigné sous l'appellation de Zircaloy 4 renferme de 1,2 à 1,7 % d'étain, de 0,18 à 0,24 % de fer, 0,07 à 0,13 % de chrome, 0,0080 à 0,0200 % de carbone, 0,0050 à 0,012 % de silicium et 0,0900 à 0,1600 % d'oxygène, les pourcentages indiqués étant des pourcentages pondéraux, le total des pourcentages en poids des composants fer et chrome se situant entre 0,28 et 0,37 %. Le solde est constitué par du zirconium, à l'exception d'impuretés inévitables, dans des proportions très faibles.

On a indiqué, dans le tableau donné ci-dessous, les compositions (en pourcentages pondéraux) de trois couches de surface correspondant respectivement aux exemples de réalisation 1, 2 et 3 de l'invention, ces couches présentant entre elles certaines différences de composition concernant les éléments d'addition introduits ou les pourcentrages pondéraux de ces éléments.

| | Sn | Fe | Cr | O | Nb | V | Zr |
|---|---|---|---|---|---|---|---|
| Ex.1 | 0.35/0.65 | 0.22/0.28 | - | 0.09/0.16 | 0.35/0.65 | - | BALANCE |
| Ex.2 | 0.35/0.65 | 0.35/0.45 | - | 0.09/0.16 | 0.35/0.65 | - | BALANCE |
| Ex.3 | 0.35/0.65 | 0.55/0.65 | - | 0.09/0.16 | - | 0.25/0.35 | BALANCE |

Les compositions de la couche de surface des crayons combustibles suivant l'invention sont caractérisées par la présence d'étain dans une proportion significative de 0,35 à 0,65 %, par la présence de fer dans une proportion qui peut être variable mais qui est toujours comprise entre 0,20 et 0,65 %, par l'absence de chrome qui ne peut être présent qu'à titre d'impuretés résiduelles en quantité très faible ainsi que par la présence de l'un des éléments niobium et vanadium dans des proportions significatives et bien déterminées.

Dans tous les cas, la présence simultanée d'étain et d'un élément tel que le niobium ou le vanadium permet d'obtenir à la fois des caractéristiques mécaniques très satisfaisantes et en particulier une forte dureté et des caractéristiques de tenue à la corrosion comparables à celles des alliages de zirconium renfermant du vanadium et exempt d'étain.

Le vanadium et le niobium permettent de diminuer l'absorption superficielle d'hydrogène par la gaine et donc améliorent la tenue à la corrosion, dans l'ambiance du réacteur.

A l'issue de son formage et après traitement thermique, la gaine duplex du crayon combustible suivant l'invention présente dans son ensemble une structure cristalline homogène sous forme de phase recristallisée.

Exemples 4, 5 et 6 :

Dans ces exemples de réalisation d'un crayon combustible suivant l'invention, la couche tubulaire interne est constituée par un alliage à base de zirconium renfermant sensiblement 1 % de niobium, à l'exclusion de tout autre élément d'alliage métallique en quantité significative.

Cette couche interne présente dans tous les cas la composition pondérale suivante : niobium 0,8 à 1,2 %, oxygène 0,09 à 0,16 %, le solde étant constitué, à l'exception d'impuretés inévitables en quantité très faible, par du zirconium.

Les gaines des crayons combustibles selon les exemples de réalisation 4, 5 et 6 diffèrent entre elles par la composition de leur couche de surface.

Dans le cas de l'exemple 4, la couche de surface présente la composition donnée ci-dessus dans le cas de l'exemple 1. De même, la couche de surface des gaines des crayons selon les exemples 5 et 6 présentent les compositions données ci-dessus en ce qui concerne les exemples de réalisation 2 et 3 respectivement.

La gaine à l'état final présente une structure entièrement recristallisée.

Des essais de tenue à la corrosion à 400° ont montré que les gaines composites des crayons suivant l'invention présentent des caractéristiques nettement améliorées par rapport aux gaines en Zircaloy 4.

De plus, la tenue au fluage à 400° des gaines de crayons combustibles comportant une couche interne en alliage zirconium-niobium est très supérieure à la tenue au fluage des gaines en zircaloy 4 homogènes ou composites.

De plus, selon un avantage particulier de cette invention, l'alliage Zr-Nb diminue notablement le risque de corrosion sous contrainte dû à l'interaction pastille-gaine, car cet alliage présente une perte de ductilité relative plus faible que celle des alliages de l'art antérieur.

Dans tous les cas, la dureté de la couche superficielle à basse ou à haute température est très supérieure à la dureté de la couche de surface correspondante des gaines composites suivant l'art antérieur.

L'invention ne se limite pas aux modes de réalisation qui ont été décrits.

C'est ainsi qu'il est possible d'utiliser une couche interne constituée par un alliage de zirconium tel que le Zircaloy 2 renfermant 1,2 à 1,7 % d'étain, 0,07 à 0,2 % de fer, 0,05 à 0,15 % de chrome, 0,03 à 0,08 % de nickel et 0,07 à 0,15 % d'oxygène, la somme des pourcentages pondéraux en fer, chrome et nickel étant comprise entre 0,18 et 0,38 %.

Il est possible également, en ce qui concerne la couche de surface, de sélectionner des intervalles de composition plus précis, à l'intérieur des intervalles donnés ci-dessus.

Enfin, les crayons combustibles suivant l'invention peuvent être utilisés aussi bien dans le cas des assemblages combustibles pour les réacteurs nucléaires à eau sous pression que dans le cas des assemblages combustibles pour les réacteurs nucléaires à eau bouillante.

## Revendications

1. Crayon pour un assemblage combustible d'un réacteur nucléaire, contenant un matériau combustible nucléaire, à l'intérieur d'une gaine comportant une couche tubulaire interne et une couche de surface en des alliages de zirconium différents l'un de l'autre, caractérisé par le fait que la couche de surface présentant une épaisseur comprise entre 10 et 25 % de l'épaisseur totale de la paroi de la gaine est constitué par un alliage à base de zirconium contenant de 0,35 à 0,65 % en poids d'étain, de 0,20 à 0,65 % de fer, de 0,09 à 0,16 % d'oxygène ainsi que du niobium dans une proportion de 0,35 à 0,65 % ou du vanadium dans une proportion de 0,25 à 0,35 %, le solde, à l'exception des impuretés inévitables, étant constitué par du zirconium.

2. Crayon suivant la revendication 1, caractérisé par le fait que la couche de surface est constituée par un alliage à base de zirconium contenant de 0,35 à 0,65 % d'étain, de 0,22 à 0,28 % de fer, de 0,09 à 0,16 % d'oxygène et de 0,35 à 0,65 % de niobium, le solde, à l'exception des impuretés éventuelles, étant constitué par du zirconium.

3. Crayon suivant la revendication 1, caractérisé par le fait que la couche de surface est constituée par un alliage à base de zirconium contenant de 0,35 à 0,65 % d'étain, de 0,35 à 0,45 % de fer, de 0,09 à 0,16 % d'oxygène, de 0,35 à 0,65 % de niobium, le solde, à l'exception des impuretés éventuelles, étant constitué par du zirconium.

4. Crayon suivant la revendication 1, caractérisé par le fait que la couche de surface est constituée par un alliage contenant de 0,35 à 0,65 % d'ètain, de 0,55 à 0,65 % de fer, de 0,09 à 0,16 % d'oxygène et de 0,25 à 0,35 % de vanadium, le solde, à l'exception des impuretés éventuelles, étant constitué par du zirconium.

5. Crayon suivant l'une quelconque des revendications 1 à 4, caractérisé par le fait que la couche interne est constituée par un alliage à base de zirconium contenant de 1,2 à 1,7 % d'étain, de 0,18 à 0,24 % de fer, de 0,07 à 0,13 % de chrome, de 0,09 à 0,16 % d'oxygène, de 0,008 à 0,02 % de carbone, de 0,005 à 0,012 % de silicium, la somme des pourcentages pondéraux en fer et chrome étant comprise entre 0,28 et 0,37 %.

6. Crayon suivant l'une quelconque des revendications 1 à 4, caractérisé par le fait que la couche interne de la gaine est constituée par un alliage à base de zirconium contenant de 1,2 à 1,7 % d'étain, de 0,07 à 0,2 % de fer, de 0,05 à 0,15 % de chrome, de 0,03 à 0,08 % de nickel.

7. Crayon suivant l'une quelconque des revendications 1 à 4, caractérisé par le fait que la couche interne de la gaine est constituée par un alliage à base de zirconium contenant de 0,8 à 1,2 % de niobium et 0,09 à 0,16 % d'oxygène, le solde, à l'exception des impuretés éventuelles étant constitué par du zirconium.

**Patentansprüche**

1. Brennstab für einen Kernreaktor, enthaltend einen Nuklearbrennstoff, im Innern einer Hülle, die eine rohrförmige Innenschicht und eine Oberflächenschicht aufweist, die aus voneinander unterschiedlichen Zirkoniumlegierungen bestehen, dadurch gekennzeichnet, daß die Oberflächenschicht eine Dicke von 10 bis 25% der gesamten Wanddicke der Hülle hat und aus einer Zirkonium-Basislegierung besteht, die in Gew.% 0,35 bis 0,65 Zinn, 0,20 bis 0,65% Eisen, 0,09 bis 0,16% Sauerstoff, ebenso wie Niob mit einem Anteil von 0,35 bis 0,65% oder Vanadium in einer Menge von 0,25 bis 0,35%, Rest Zirkonium einschließlich unvermeidbarer, Verunreinigungen enthält.

2. Brennstab nach Anspruch 1, dadurch gekennzeichnet, daß die Oberflächenschicht aus einer Zirkonium-Basislegierung besteht, die 0,35 bis 0,65% Zinn, 0,22 bis 0,28% Eisen, 0,09 bis 0,16% Sauerstoff und 0,35 bis 0,65% Niob, Rest Zirkonium einschließlich unvermeidbarer Verunreinigungen, enthält.

3. Brennstab nach Anspruch 1, dadurch gekennzeichnet, daß die Oberflächenschicht aus einer Zirkonium-Basislegierung besteht, die 0,35 bis 0,65% Zinn, 0,35 bis 0,45% Eisen, 0,09 bis 0,16% Sauerstoff, 0,35 bis 0,65% Niob, Rest Zirkonium, einschließlich unvermeidbarer Verunreinigungen, enthält.

4. Brennstab nach Anspruch 1, dadurch gekennzeichnet, daß die Oberflächenschicht aus einer Legierung mit 0,35 bis 0,65% Zinn, 0,55 bis 0,65% Eisen, 0,09 bis 0,16% Sauerstoff und 0,25 bis 0,35% Vanadium, Rest Zirkonium, einschließlich unvermeidbarer Verunreinigungen, enthält.

5. Brennstab nach einem der Ansprüche 1 bis 4, dadurch gekennzeichnet, daß die Innenschicht aus einer Zirkonium-Basislegierung besteht, die 1,2 bis 1,7% Zinn, 0,18 bis 0,24% Eisen, 0,07 bis 0,13% Chrom, 0,09 bis 0,16% Sauerstoff, 0,008 bis 0,02% Kohlenstoff, 0,005 bis 0,012% Silizium enthält, wobei die Summe der Gewichtsprozente von Eisen und Chrom zwischen 0,28 und 0,37% beträgt.

6. Brennstab nach einem der Ansprüche 1 bis 4, dadurch gekennzeichnet, daß die Innenschicht der Hülle gebildet wird durch eine Zirkonium-Basislegierung mit 0,12 bis 1,7% Zinn, 0,07 bis 0,2% Eisen, 0,05 bis 0,15% Chrom, 0,03 bis 0,08% Nickel.

7. Brennstab nach einem der Ansprüche 1 bis 4, dadurch gekennzeichnet, daß die Innenschicht der Hülle gebildet wird durch eine Zirkonium-Basislegierung mit 0,8 bis 1,2% Niob und 0,09 bis 0,16% Sauerstoff, Rest Zirkonium einschließlich unvermeidbarer Verunreinigungen.

**Claims**

1. Rod for a fuel assembly of a nuclear reactor, containing a nuclear fuel material inside a sheath comprising an inner tubular layer and a surface layer of zirconium alloys which are different from one another, characterised in that the surface layer has a thickness of between 10 and 25% of the total thickness of the wall of the sheath and consists of a zirconium-base alloy containing by weight 0.35 to 0.65% tin, 0.20 to 0.65% iron, 0.09 to 0.16% oxygen, and niobium in a proportion of 0.35 to 0.65% or vanadium in a proportion of 0.25 to 0.35%, the remainder consisting of the zirconium, apart from inevitable impurities.

2. Rod according to claim 1, characterised in that the surface layer consists of a zirconium-base alloy containing 0.35 to 0.65% tin, 0.22 to 0.28% iron, 0.09 to 0.16% oxygen and 0.35 to 0.65% niobium, the remainder consisting of the zirconium, apart from inevitable impurities.

3. Rod according to claim 1, characterised in that the surface layer consists of a zirconium-base alloy containing 0.35 to 0.65% tin, 0.35 to 0.45% iron, 0.09 to 0.16% oxygen, 0.35 to 0.65% niobium, the remainder consisting of the zirconium, apart from inevitable impurities.

4. Rod according to claim 1, characterised in that the surface layer consists of an alloy containing 0.35 to 0.65% tin, 0.55 to 0.65% iron, 0.09 to 0.16% oxygen and 0.25 to 0.35% vanadium, the remainder consisting of the zironium, apart from inevitable impurities.

5. Rod according to any one of claims 1 to 4, characterised in that the inner layer consists of a zirconium-base alloy containing 1.2 to 1.7% tin, 0.18 to 0.24% iron, 0.07 to 0.13% chromium, 0.09 to 0.16% oxygen, 0.008 to 0.02% carbon, 0.005 to 0.012% silicon, the sum of the percentages by weight of iron and chromium being between 0.28 and 0.37%.

6. Rod according to any one of claims 1 to 4, characterised in that the inner layer of the sheath consists of a zirconium-base alloy containing 1.2 to 1.7% tin, 0.07 to 0.2% iron, 0.05 to 0.15% chromium and 0.03 to 0.08% nickel.

7. Rod according to any one of claims 1 to 4, characterised in that the inner layer of the sheath consists of a zirconium-base alloy containing 0.8 to 1.2% niobium and 0.09 to 0.16% oxygen, the remainder consisting of the zirconium, apart from inevitable impurities.